# NEUE EUROPÄISCHE PATENTSCHRIFT

(11) **EP 2 121 359 B2**
(45) Veröffentlichungstag und Bekanntmachung des Hinweises auf die Entscheidung über den Einspruch: **31.05.2017**
(45) Hinweis auf die Patenterteilung: 22.09.2010
(21) Anmeldenummer: 08707593.3
(22) Anmeldetag: 07.02.2008
(51) Int. Cl.: B60G 17/052, F16K 31/06, F16K 31/56

(54) **VORRICHTUNG ZUR GESTEUERTEN BETÄTIGUNG EINES SCHALTORGANS EINES VENTILS**
DEVICE FOR THE CONTROLLED ACTUATION OF A SWITCHING ELEMENT OF A VALVE
DISPOSITIF D'ACTIONNEMENT COMMANDÉ D'UN ORGANE DE COMMUTATION D'UNE SOUPAPE

(30) Priorität: 07.02.2007 DE 102007005980
(43) Veröffentlichungstag der Anmeldung: 25.11.2009
(73) Patentinhaber: KNORR-BREMSE Systeme für Nutzfahrzeuge GmbH, 80809 München (DE)
(72) Erfinder: FRY, Matthew, Bristol BS15 2 NL (GB); RÖTHER, Friedbert, 74389 Cleebronn (DE); MEDERER, Martin, 80797 München (DE); TOTH, Janos, H-6000 Kecskemét (HU); HERGES, Michael, 80935 München (DE)
(74) Vertreter: Specht, Peter
(86) Internationale Anmeldenummer: PCT/EP2008/000934
(87) Internationale Veröffentlichungsnummer: WO 2008/095700

(56) Entgegenhaltungen:
- EP-A- 1 538 379
- EP-B- 0 050 711
- DE-A1- 2 623 235
- DE-A1- 4 130 638
- DE-C1- 4 120 824
- DE-C1- 19 913 380
- GB-A- 808 577
- GB-A- 2 159 249

## Beschreibung

Die Erfindung betrifft eine Vorrichtung zur gesteuerten Betätigung eines Schaltorgans eines Ventils, insbesondere eines Containerschalterventils eines Nutzfahrzeugs, nach dem Oberbegriff des Anspruchs 1.

Aus der DE 26 23 235 ist ein rein mechanisch betätigbares Containerschaltventil bekannt.

Ausgehend von diesem Stand der Technik wurde in der DE 41 20 824 C1 ein Schaltventil geschaffen, welches pneumatisch/mechanisch betätigbar ist, wobei zum Erreichen der Stellung Fahrt ein Steuerkolben mit Druckluft beaufschlagt wird, welcher ein Schaltorgan in Stellung Fahrt überführt.

Demgegenüber wurde in der DE 33 44 022 der Einsatz von Magnetventilen vorgeschlagen, die dazu ausgelegt sind, einen Schieber eines Schaltventils pneumatisch zwischen verschiedenen Stellungen zu verschieben. Zwischen den verschiedenen Schaltstellungen zur Ansteuerung der Luftfederungsanlage kann zwar mit einem Handhebel gewählt werden. Die Ansteuerung der Magnetventile erfolgt aber rein elektrisch, wobei die eigentliche Ansteuerung und Bewegung des Schiebers pneumatisch erfolgt.

GB-A-808577 zeigt eine Vorrichtung zur gesteuerten Betätigung eines Schaltorgan eines Ventils eines Flugzeugs.

Aus der gattungsgemäßen DE 199 13 380 C1 ist eine Vorrichtung zur gesteuerten Betätigung eines Schaltorgans eines Ventils bekannt, die eine das Schaltorgan selbsttätig aus einer ersten Funktionsstellung in eine Sicherheitsstellung verschiebende Feder aufweist, welche an einem Ende des Schaltorgans gegen die Rastierkraft einer Rastierung mit einer Rastierkugel einwirkt, deren Rastierkraft durch Ansteuerung eines Magnetventils veränderlich ist, wobei das Magnetventil dazu dient, einen Steuerkolben der Rastierung mit Druckluft zu beaufschlagen.

Diese Vorrichtung hat sich zwar an sich bewährt, weist aber den Nachteil auf, das nach wie vor auf eine pneumatische Steuerung des Steuerkolbens des Schaltventils nicht verzichtet werden kann.

Die Erfindung hat demgegenüber die Aufgabe, einen anderen Weg zu beschreiten. Ausgehend von der DE 26 23 235 beschriebenen Lösung soll ein weiterentwickeltes Schaltventil geschaffen werden, bei dem anders als in dem gesamten weiteren eingangs genannten Stand der Technik auf eine pneumatische Ansteuerung des Schaltorgans oder eines diesem zugeordneten Steuerkolben gänzlich verzichtet werden kann, aber dennoch gegenüber der Lösung der DE 26 23 235 eine vereinfachte Handhabung ereicht wird.

Die Erfindung löst diese Aufgabe durch den Gegenstand des Anspruchs 1.

Erfindungsgemäß ist lediglich eine elektrische Ansteuerung eines Elektromagneten zum Betätigen der Rastierung notwendig. Ein Steuerkolben ist überhaupt nicht mehr erforderlich. Darüber hinaus wird das Schaltelement auch nicht direkt pneumatisch angesteuert oder betätigt. Die Ansteuerung erfolgt elektrisch. Darüber hinaus ist das Schaltorgan mechanisch beweglich, wobei die verschiedenen Betriebsstellungen des Schaltventils mechanisch manuell oder durch Federkraft erreichbar sind.

Erfindungsgemäß wird eine Vorrichtung zur gesteuerten Betätigung eines Schaltorgans eines Ventils geschaffen, welche auf den Einsatz von Druckluft als Steuermedium zur Betätigung des Schaltorgans oder eines diesem zugeordneten Steuerkolbens gänzlich verzichten kann.

Vorteilhafte Ausgestaltungen der Erfindung sind in den Unteransprüchen angegeben.

Nachfolgend wird die Erfindung anhand eines Ausführungsbeispiels unter Bezug auf die Zeichnung näher beschrieben. Es zeigt:

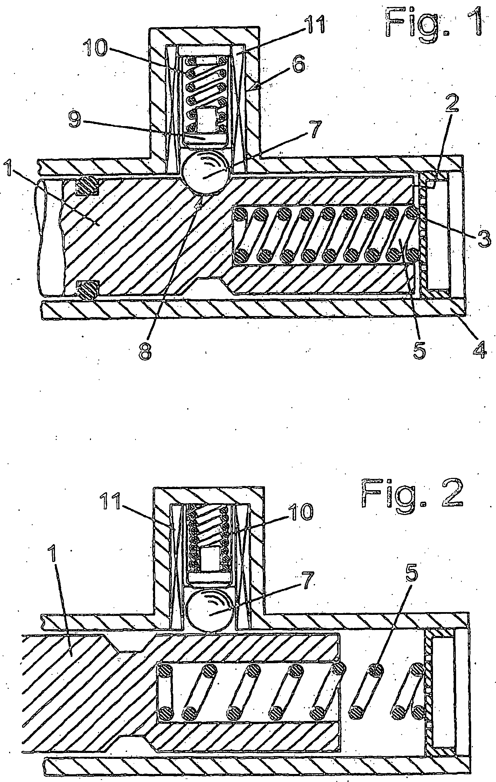

Fig. 1 zeigt einen Endbereich eines Schaltorgans, welches z.B. die Schaltwelle eines Containerschaltventils bildet, in einer ersten Betriebsstellung; und
Fig,. 2 die Anordnung aus Fig. 1 in einer zweiten Betriebsstellung.

Fig. 1 zeigt einen Endbereich eines Schaltorgans 1, welches z.B. die Schaltwelle eines Containerschaltventils der Luftfederungsanlage eines Fahrzeugs bildet.

Das Schaltorgan 1 kann mit einer manuell betätigbaren Handhabe, z.B. einem Schalthebel (hier nicht dargestellt), verbunden sein, mit dem das Schaltorgan 1 verschwenkbar und axial bewegbar ist, um es zwischen verschiedenen Schaltstellungen zu bewegen, in denen z.B. Ventile betätigt werden (hier nicht dargestellt), um am Fahrzeug entsprechend der gewünschten Stellung (z.B. Heben oder Senken), Funktionselemente der Luftfederungsanlage anzusteuern.

Das Schaltorgan 1 ist axial zwischen einer Stellung "Fahrt", in der es nicht möglich ist, das Schaltorgan 1 zu verdrehen, und einer Stellung "Stopp", in der es möglich ist, das Schaltorgan 1 um seine Längsachse zu verdrehen, verschieblich. Die Stellung "Stopp" ist in Fig. 1 und die Stellung "Fahrt" in Fig. 2 abgebildet.

In der Stellung "Stopp" können z.B. durch Drehen des nicht dargestellten Hebels auf die eine bzw. die andere Seite die Stellungen "Heben" und "Senken" erreicht werden, so dass die Luftfederungsanlage im Sinne eines Hebens oder Senkens des Fahrzeugs ansteuerbar ist. In der Stellung Fahrt ist dies nicht möglich.

Zwischen dem einen Ende 2 des Schaltorgangs 1 und einem Deckel 3 eines Gehäuses 4 der Vorrichtung ist eine Feder 5 angeordnet, die hier als Druckfeder wirkt.

Die Feder 5 ist derart ausgelegt, dass sie das Schaltorgan 1 selbsttätig in die Stellung "Fahrt" der Fig. 2 drückt.

Aus dieser Stellung kann das Schaltorgan 1 manuell gegen die Kraft der Feder 5 zurück in die Stellung Stopp bewegt werden.

Zur Arretierung des Schaltorgans 1 in der Stellung Stopp dient eine Arretierungsvorrichtung 6, die als Rastierung ausgebildet ist.

Diese Arretierungsvorrichtung 6 weist einen Rastkörper 7, erfindungsgemäß eine Rastkugel, auf, der dazu ausgelegt ist, in einer ersten Betriebsstellung radial in eine Ausnehmung, insbesondere eine Nut 8, am Außenumfang des Schaltorgans 1 einzugreifen.

Auf den Rastkörper 7 wirkt eine radial außerhalb der Rastkugel angeordnete und diese direkt oder über einen Anlageteller 9 kraftbeaufschlagende Rastierungsfeder 10 ein.

Die vorzugsweise als Schraubenfeder ausgebildete Rastierungsfeder 10 drückt den Rastkörper 7 in die Nut 8 ein.

Derart ist die Stellung Stopp verriegelt, da die Federn 5 und 10 derart ausgelegt und aufeinander abgestimmt sind, dass die Feder 5 den Rastkörper 7 nicht gegen die Kraft der Rastierungsfeder 9 aus ihrer Arretierung in der Nut 8 lösen kann, wenn auf den Rastkörper 7 die volle Federkraft der Rastierungsfeder 10 wirkt.

Um das Schaltorgan dennoch gezielt in die Stellung Fahrt überführen zu können, ist die Rastierung an der Anordnung aus der Rastierungsfeder 10 und dem Rastkörper 7 mit einem Elektromagneten 11 versehen, so dass die Anordnung aus Elektromagnet 11, Rastierungsfeder 10 und Rastkörper 7 einen speziellen elektromagnetischen Aktuator bildet, der als Rastierung dient.

Der Aktuator ist hier in besonders bevorzugter Ausführung derart ausgelegt, dass bei Beaufschlagung des Elektromagneten 11 mit Spannung ein elektromagnetisches Feld erzeugt wird, welches die auf die Rastierkugel 7 wirkende Federkraft derart verringert, dass die Feder 5, die auf das eine Ende des Schaltorgangs einwirkt, den Rastierkörper 7 aus der Nut 8 drücken und die Schaltwelle 1 in die Stellung Fahrt verschieben kann.

Ein besonderer Vorteil dieser Anordnung ist darin zu sehen, dass auf das Medium Steuerluft sowie auf die Einrichtung "Steuerkolben" verzichtet werden kann, um das Schaltorgan zu betätigen. Die Betätigung erfolgt vielmehr rein mechanischlelektromagnetisch. Der aus dem Stand der Technik bekannte Weg der Nutzung von Pneumatik zur Betätigung eines Steuerkolbens wird damit verlassen. Auf das Hilfsmittel der Druckluft zur Steuerung kann ganz verzichtet werden, was in einfacher Weise die Herstellkosten der Steuerungsvorrichtung verringert und ihre Zuverlässigkeit erhöht.

**Bezugszeichen**

| | |
|---|---|
| Schaltorgan | 1 |
| Ende | 2 |
| Deckel | 3 |
| Gehäuse | 4 |
| Feder | 5 |
| Arretierungsvorrichtung | 6 |
| Rastkörper | 7 |
| Nut | 8 |
| Rastierungsfeder | 9 |
| Rastierungsfeder | 10 |
| Elektromagnet | 11 |

## Patentansprüche

1. Vorrichtung zur gesteuerten Betätigung eines Schaltorgans (1) eines Ventils eines Nutzfahrzeugs, mit
a. einer das Schaltorgan selbstständig aus einer ersten Betriebsstellung in eine zweite Betriebsstellung bewegenden Druckanordnung, insbesondere einer Feder (5), welche gegen die Rastierkraft einer als Rastierung ausgebildeten Arretierungsvorrichtung (6) einwirkt,
b. wobei zwischen dem einen Ende (2) des Schaltorgangs (1) und einem Gehäuse (4) der Vorrichtung die Feder (5) angeordnet ist, die als Druckfeder wirkt, welche das Schaltorgan (1) selbsttätig in die erste Betriebsstellung drückt,
c. wobei die Arretierungsvorrichtung (6) einen als Rastierkugel ausgebildeten Rastkörper (7) aufweist, welcher dazu ausgelegt ist, in einer ersten Betriebsstellung radial in eine Ausnehmung, insbesondere eine Nut (8), am Außenumfang des Schaltorgans (1) einzugreifen und
d. wobei auf den als Rastierkugel ausgebildeten Rastkörper (7) eine Rastierungsfeder (10) einwirkt,
**dadurch gekennzeichnet, dass**
e. die Rastierung einen elektromagnetisch betätigten Aktuator zum Ansteuern und Lösen oder Verriegeln wenigstens einer der Stellungen des Schaltorgans (1) aufweist, der aus einer Anordnung aus einem Elektromagnet (11), der Rastierungsfeder (10) und dem als Rastierkugel ausgebildeten Rastkörper (7) gebildet ist, wobei auf den als Rastierkugel ausgebildeten Rastkörper (7) der Elektromagnet (11) direkt einwirkt, und
f. der elektrömagnetische Aktuator derart ausgelegt ist, dass bei Beaufschlagung des Aktuators mit Spannung ein elektromagnetisches Feld erzeugt wird, welches die auf den als Rastierkugel ausgebildeten Rastkörper (7) wirkende Federkraft der Rastierungsfeder (10) derart verringert, dass die Feder (5), die auf das eine Ende des Schaltorgangs (1) einwirkt, den Rastkörper (7) aus der Nut (8) drückt und das Schaltorgan (1) verschiebt.

2. Vorrichtung nach Anspruch 1, **dadurch gekennzeichnet, dass** die Rastierungsfeder (10) radial außerhalb des als Rastierkugel ausgebildeten Rastkörpers (7) angeordnet ist und diesen direkt oder über einen Anlageteller (9) mit Kraft beaufschlagt und in die Nut (8) drückt.

3. Vorrichtung nach einem der vorstehenden Ansprüche, **dadurch gekennzeichnet, dass** die Feder (5) und die Rastierungsfeder (10) derart ausgelegt und aufeinander abgestimmt sind, dass die Feder (5) den als Rastierkugel ausgebildeten Rastkörper (7) nicht gegen die Kraft der Rastierungsfeder (9) aus ihrer Arretierung in der Nut (8) lösen kann, wenn auf den als Rastierkugel ausgebildeten Rastkörper (7) die volle Federkraft der Rastierungsfeder (10) wirkt.

## Claims

1. A device for controlled actuation of a switching element (1) of a valve of a utility vehicle, comprising
(a) a pressing system, in particular a spring (5), which moves said switching element automatically from a first operating position into a second operating position, said spring acting in opposition to the locking force of a locking device (6) configured as a locking mechanism,
(b) wherein the spring (5) is disposed between one end (2) of said switching element (1) and a housing (4) of the device, which spring acts as compression spring that presses said switching element (1) automatically into said first operating position,
(c) wherein said locking device (6) comprises a locking body (7) which is formed as a locking sphere and which is designed in a first operating position for radial engagement into a recess, in particular a groove (8), on the outer circumference of the switching element (1), and
(d) wherein a locking spring (10) acts upon said locking body (7) which is formed as a locking sphere,
**characterized in that**
(e) the locking mechanism comprises an electromagnetically operated actuator for controlling and releasing or locking at least one of the positions of said switching element (1), which actuator is composed of a system including an electromagnet (11), said locking spring (10) and said locking body (7) formed as a locking sphere, wherein said electromagnet acts directly upon said locking body (7) which is formed as a locking sphere, and
(f) said electromagnetic actuator is designed in such a way that when a voltage is applied to said actuator an electromagnetic field is generated which reduces the spring force of said locking spring (10) which acts upon said locking body (7) formed as a locking sphere in such a manner that said spring (5), which acts upon the one end of the switch element (1), presses said locking body (7) out of said groove (8) and displaces said switching element (1).

2. A device according to claim 1, **characterized in that** said locking spring (10) is disposed radially outside the locking body (7) formed as a locking sphere, and acts upon said body with a force either directly or via an applicator disc (9) and presses it into the groove (8).

3. A device according to any of the preceding claims, **characterized in that** said spring (5) and said locking spring (10) are designed and adapted to each other in such a way that said spring (5) is unable to release said locking body (7) formed as a locking sphere out of the locked position in said groove (8) in opposition to the force of said locking spring (9) when the full elastic force of said locking spring (10) acts upon said locking body (7) formed as a locking sphere.

## Revendications

1. Dispositif d'actionnement commandé d'un organe de commutation (1) d'une soupape dans un véhicule utilitaire, comprenant
a) un système de pression, en particulier un ressort (5), qui porte ledit organe de commutation d'une première position de service en une deuxième position de service de façon automatique, ledit ressort agissant à l'encontre de l'effort de serrage d'un dispositif d'arrêt (6) conçu sous forme d'un mécanisme d'arrêt,
b) dans lequel le ressort (5) est disposé entre la première extrémité (2) dudit organe de commutation (1) et un carter (4) du dispositif, ce ressort agissant en tant que ressort de compression, qui presse ledit organe de commutation (1) en ladite deuxième position de service de manière automatique,
c) ledit dispositif d'arrêt (6) comprenant un corps de serrage (7) conçu comme une bille d'arrêt conçu pour l'engrenage radial dans un creux, en particulier une rainure (8), en une première position de service, cette rainure étant formée à la périphérie extérieure dudit organe de commutation (1), et
d) un ressort à cran d'arrêt (10) agissant sur ledit corps de serrage (7) conçu comme une bille d'arrêt,
**caractérisé en ce que**
e) ledit mécanisme d'arrêt comprend un acteur commandé par voie électromagnétique à commander et desserrer ou arrêter au moins une des positions dudit organe de commutation (1), lequel acteur est composé d'un système renfermant un solénoïde (11), ledit ressort à cran d'arrêt (10) et ledit corps de serrage (7) conçu comme une bille d'arrêt, ledit solénoïde agissant directement sur ledit corps de serrage (7) conçu comme une bille d'arrêt, et
f) ledit acteur électromagnétique est conçu d'une telle façon, que, quand une tension est appliquée audit acteur, un champ électromagnétique soit engendré, qui réduit la tension de ressort dudit ressort à cran d'arrêt (10), qui agit sur ledit corps de serrage (7) conçu comme une bille d'arrêt, d'une telle manière, que ledit ressort (5) agissant sur ladite première extrémité dudit organe de commutation (1) presse ledit corps de serrage (7) en dehors de ladite rainure (8) en déplaçant ledit organe de commutation (1).

2. Dispositif selon la revendication 1, **caractérisé en ce que** ledit ressort à cran d'arrêt (10) est disposé radialement de l'extérieur dudit corps de serrage (7) conçu comme une bille d'arrêt et agit sur le dernier à un effort soit directement ou via un disque d'application (9), en le pressant dans ladite rainure (8).

3. Dispositif selon une quelconque des revendications précédentes, **caractérisé en ce que** ledit ressort (5) et ledit ressort à cran d'arrêt (10) sont conçus et ajustés l'un à l'autre d'une telle manière, que ledit ressort (5) ne soit pas capable de desserrer ledit corps de serrage (7) conçu comme une bille d'arrêt en dehors de la position arrêtée dans ledit rainure (8) à l'encontre de l'effort dudit ressort à cran d'arrêt (9) quand l'effort élastique complet dudit ressort à cran d'arrêt (10) agit sur ledit corps de serrage (7) conçu comme une bille d'arrêt.
